# EUROPEAN PATENT SPECIFICATION

(11) **EP 3 024 891 B1**
(45) Date of publication and mention of the grant of the patent: **21.03.2018**
(21) Application number: 14744797.3
(22) Date of filing: 16.07.2014
(51) Int. Cl.: C08L 77/00, C08L 77/06, C08K 5/098, C08K 5/14

(54) **STABILISED POLYAMIDE COMPOSITION**
STABILISIERTE POLYAMIDZUSAMMENSETZUNG
COMPOSITION DE POLYAMIDE STABILISÉE

(30) Priority: 22.07.2013 EP 13306050
(43) Date of publication of application: 01.06.2016
(73) Proprietor: Rhodia Operations, 75009 Paris (FR)
(72) Inventor: JEOL, Stéphane, Cumming, GA 30041 (US); SPERONI, Franco Enrico, I-20816 Ceriano Laghetto (MB) (IT)
(74) Representative: Schuck, Alexander
(86) International application number: PCT/EP2014/065302
(87) International publication number: WO 2015/011001

(56) References cited:
- EP-A2- 0 475 038
- US-A- 3 359 127
- US-A- 3 427 190
- US-A1- 2013 197 145

## Description

### Technical Field

The present invention relates to stabilised polyamide compositions, in particular to polyamide compositions showing stability to heat-ageing.

### Background Art

Polyamides are synthetic polymers that are widespreadly employed in the manufacture of various finished articles prepared by moulding or extrusion. Polyamides can undergo degradation phenomena upon exposure to external agents like light and UV rays, high temperatures or adverse weather conditions. Degradation phenomena can be triggered in particular by the high temperatures reached in manufacturing processes and/or moulding/extrusion processes; as a result, loss of mechanical properties and discoloration is observed. The instability of polyamides to high temperatures is also a major problem in applications wherein polyamide articles are exposed to high temperatures, for instance in automotive applications.

There is therefore the need to provide polyamides endowed with improved resistance to high temperatures. In order to achieve this goal, it is known to add to polyamides stabilizing agents, otherwise referred to as heat-aging stabilizers. For instance, it is known to use CuI in association with KI, which provides good stabilization properties; nevertheless, the use of CuI/KI has a relevant impact on industrial scale manufacturing costs.

It is also known in the art to use polyols as thermal stabilizers. For example, WO 2012/140099 A to Rhodia Operations discloses the use of a polyamide stabilised to heat, light, and/or adverse weather conditions through the use of a compound comprising at least one amine function and at least two aliphatic hydroxy functions.

WO 2012/140100A, also to Rhodia Operations, discloses the use of polyols as thermal stabilizers in polyamide compositions.

US 2012196961 (DU PONT) discloses polyamide compositions containing an amino polyhydric acid as thermal stabilizer.

Further thermal stabilizers for polyamide compositions are carboxylic and polycarboxylic acids and derivatives thereof.

For example, US 4727106 (CELANESE ENG RESINS INC) discloses a composition comprising an oxymethylene polymer having incorporated therein stabilizing amounts of a polyamide and a transition metal salt of an organic acid. Salts of transition metals of di- and tri-carboxylic salts, optionally containing -OH groups (including citric acid, malic acid and tartaric acid), are mentioned for example on page 8, line 56 to col. 9, line 5 of this document. The compositions of US 4727106 may also contain a filler, such as glass, talc, white mica and gold mica. However, the amount of polyamide in the composition is very low, as the polyamide itself is used as a thermal stabilizer; this document teaches that the polyamide content ranges from about 0.05 to 2 wt% with respect to the weight of the composition (col. 10, lines 9 - 14). Furthermore, this document does not specifically disclose compositions containing salts of transition metals of di- and tri-carboxylic salts.

EP 0475038 A (GE PLASTICS JAPAN LTD) discloses a composition comprising:
- 40-90% wt% poly(phenylene) sulphide PPS;
- 5-55% wt% poly(phenylene ether) PPE;
- 5-55% wt% of a polyamide (PA);
- 0,01-10 wt parts of compatibilizer;
- 5-150 wt parts inorganic fillers.

The compatibilizer comprises, *interalia,* citric acid, malic acid, agaric acid or derivatives thereof, e.g. salts (reference is made, for example, to page 4, lines 49, 53, 56); calcium malate, calcium citrate and potassium citrate are mentioned at page 5, lines 2 and 3. The compositions of this document are said to have *"improved impact resistance, heatresistance, and appearance "a n d "do not become distorted at high temperatures nor cloud up when their surfaces are treated with chlorinated solvents"*(*page* 2, lines 35 - 37 and page 9, lines 34 - 36). However, the examples disclose only compositions wherein citric acid, not a citric acid salt, is used as compatibilizer.

US 4602058 (DOW CHEMICAL CO) discloses a composition comprising:
(a) at least one polyamide;
(b) at least one ethylene copolymer comprising carboxylic acid groups and
(c) a minor amount of at least one carboxylic acid *"in an amounteffective to improve the compatibility and the thermal stability of the blend"* (claim 1, col. 1, lines 7 - 10, col. 4, lines 22 - 26). The amount of carboxylic acid preferably ranges from 1 to 10% of the composition (claims 7 and 9). The carboxylic acid includes hydroxy acids containing at least two carboxy groups (e.g. tartaric acid: see col. 4, line 67; table VI, entry 14) and multi carboxylic acids having 3 or 4 -COOH groups, including citric acid and pyromellitic acid (col 5, lines 24 - 29). However, no mention or suggestion is made in this document of the use of salts of the aforementioned acids as heat-stabilizers.

US 5084484 (BASF AG) discloses foams comprising:
- a thermoplastic polymer including a polyamide (col. 1, lines 6 - 11 and lines 58 - 62; claim 1);
- from 0.5 to 10% wt (with respect to the thermoplastic polymer) of a dicarboxylic or polycarboxylic acid as chemical blowing agent. Examples of such acids are dicarboxylic acids having from 2 to 8 carbon atoms, which may contain a hydroxy group (col. 2, lines 12 - 21 and claim 2); pyromellitic acid is specifically mentioned as a suitable aromatic polycarboxylic acid (col. 2, lines 19 - 21 and claim 2 and examples 1 - 4). The foams are said to possess high heat-distorsion resistance (col. 1, lines 6-11). However, this document does not teach or suggest the use of salts of the aforementioned acids.

JP 10323902 (MITSUBISHI ENGINEERING PLASTICS), discloses a polyamide resin molded article which is said to be excellent in strength, heat-resistance and chemical resistance. The article is made from a compositions comprising:
- a polyamide;
- glass fibers or other fillers and
- a compound containing 2 to 4 carboxy groups.

The compounds containing 2 to 4 carboxy groups are listed at par. [0015] and include 1,2,4-benzenetricarboxylic acid (trimellitic acid), ethane tricarboxylic acid and benzene tetracarboxylic acid; examples 2 and 3 refer to trimellitic acid. The acid can be contained in an amount ranging from 0.005 to 10 parts with respect to 100 parts of polyamide (see par [0017]).

This document does not disclose or suggest compositions containing salts of the above compounds containing 2 to 4 carboxy groups.

WO 2007/122142 (HUNTSMAN ADV MAT SWITZERLAND), relates to a method for improving the thermal stability of natural or synthetic textile materials that are modified, fluorescent whitened or dyed (abstract, page 7, line 30 to page 9, line 10); in particular, the method allows reducing yellowing when the textile material is submitted to heating (page 8, line 1 and page 9, line 1; see also claim 13). The method comprises treating a textile fibre, including a polyamide (see page 7, lines 1 - 7) with a composition comprising, *interalia,* a solid, inorganic or organic acid, which can be a di- or tri-carboxylic acid (see page 6, lines 2 - 5 and line 12 and also claim 11). Particularly preferred are tartaric, oxalic, adipic and citric acid (page 6, line 14 and claim 12); trimellitic acid is specifically mentioned at page 6, line 5. The acid amounts to 10 to 60% wt of the composition (page 6, line 22). However, this document is silent on the use of salts of the above carboxylic acids as heat-stabilizers for polyamides.

WO 2012/106319 (DU PONT) discloses composition comprising:
- a polyamide resin;
- about 0.25 to about 5% wt of an aminoacid thermal stabilizer comprising one or more amino groups and two or more carboxylic acid salts;
- 10 to 60% wt reinforcing agent; and
- 0 to 30% polymeric toughener.

In particular, examples 1 -5 and 9 disclose examples of compositions containing ethylenediaminotetraacetic acid (EDTA) or EDTA salts as heat-thermal stabilizer.

US 5120801 (GEN ELECTRIC) discloses a composition containing a polyphenylene ether resin, a first and second polyamide component, a compatibilizing agent and, optionally, a filler. The compatibilizing agent includes hydroxy acids containing at least two -COOH groups, for example citric acid. Although this document states that the acids can be used in the form of salts (reference is made in particular to col. 5, lines 24 - 28), no examples with salts are reported therein and no heat-stabilization effect is stated to be associated to the acid.

US 2012083558 (EMS PATENT AG) relates to a flame-retardant PA composition containing:
- 30-92% wt aliphatic and/or aromatic semicrystalline polyamide;
- 0-50% wt filler or reinforcing agent (e.g. a glass fiber);
- 8-18% wt halogen-free flame retardant;
- 0-2% wt of at least one barium carboxylate;
- 0-5% other additives.

Barium carboxylates suitable for the above compositions are mentioned at par. [0029] - [0036] and include barium salts of dicarboxylic acids optionally containing hydroxy groups, e.g. citric acid, malic acid and tartaric acid (par [0029] and [0033]). The barium carboxylate salts are used in the composition for the purpose of inhibiting corrosion during processing of the composition. However, the examples refer only to compositions comprising barium 12-hydroxy stearate.

US 3947367 (GLYCO CHEMICALS INC) discloses a composition comprising:
- ethylene-diamine bis-stearamide (EBS);
- a substantially minor amount of at least one acid selected from malic acid, citric acid and gallic acid.

This document teaches that the composition is effective as a lubricant in and to enhance the heat stabilization of an acrylonitrile-butadiene-styrene resin (ABS resin) (abstract, claim 1 and col. 1, lines 8 - 13). This document does not teach or suggest the use of salts of the aforementioned acids as heat-stabilizers for polyamides.

EP 0392602 A (STAMICARBON) discloses a composition comprising:
- 30-90 parts of a polyamide with C/N ratio 4-7;
- 10-70 parts of a polyamide with a C/N ratio >7;
- 0.02-3 parts of a compound containing two or more carboxyl groups, like trimesic acid, pyromellitic acid, or an anhydride;
- optionally 5-100 parts of a fibrous filler, e.g. a glass fiber.

The compositions of EP 0392602 are said to show excellent resistance to metallic halide compounds and inhibit die swelling due to low compatibility of the PA. This document does not address the problem of thermal stability and does not mention or suggest the use of salts of the aforementioned acids.

WO 00/50505 (RHODIA ENG PLASTICS SRL) relates to a flame retardant polyamide-based composition comprising a melamine derivative and a molybdene compound, the composition being suitable for the manufacture of electric materials.

The compositions may contain a reinforcing filler, in an amount from 1 to 50% wt with respect to the composition (page 3, lines 33 - 35). The compositions may further contain a polycarboxylic acid (page 2, line 34 to page 5, line 7), for example trimesic acid (page 2, line 40 and claim 13) in an amount from 0.01 to 3% wt with respect to the PA (claim 12). However, this document does not teach or suggest the use of polycarboxylic acids as heat-stabilizing agents and does not mention or suggest the use of salts of the cited acids.

However, when attempts were made by the Applicant to stabilise polyamide compositions containing an amount of polyamide higher than 40% with respect to the overall weight of the compositions using a polycarboxylic acid or EDTA and possibly avoiding the use of heat-thermal stabilizers like CuI/KI, the desired heat-stabilization effect was not achieved.

US 3427190 (SHELL OIL CO) relates to compositions used for the treating of wet surfaces and to a process for making them. The compositions are said to be able to form corrosion-resistant coatings upon curing. In greater detail, this document discloses putty-like compositions comprising:
(1) a liquid polyepoxide containing only carbon, hydrogen and oxygen and having more than one vic-epoxy group;
(2) from 5% to 50% stoichiometric excess of a PA of a polycarboxylic acid containing at least 7 carbon atoms and an aliphatic polyamine which polyamide contains free amino groups, and
(3) from 0.5% to 5% by weight of sodium citrate (reference is made, for example, to claim 2).
   US 3427190 teaches to apply the compositions to a metal surface while the surface is immersed in fresh water.
   Such compositions may also contain other ingredients, including fillers, like silicas, silicates and silica aerogels (col. 10, lines 52 - 54); inert fillers are also mentioned at col. 10, lines 65 - 67: however, in this document glass fibers and carbon fibers are not mentioned.

US 3359127 (POLYMARK INT LTD) relates to a heat-transferable marking element or transfer for producing an identification marking upon a surface, said marking comprising a layer of thermoplasic PA solubilised in a mixture of alcohol and water and a curing agent, which includes citric acid, aconitic acid, phthalic acid, salicylic acid, tartaric acid, thiosalicylic acid and the ammonium and amine salts thereof (reference is made, for example, to claim 1). Coating medium 6 on column 8 contains 12.5% PA N66, N610, N66/610, 60% diacetone alcohol, 27% water, 5% titanium dioxide, 5% monastral blue and 0.7% ammonium citrate. After evaporation of the solvents and curing, the resulting composition contains a PA, a filler and ammonium citrate and the polyamide content is more than 40% wt. The markings are said to be resistant to mechanical influences and chemical or detergent media (col. 1, lines 45 - 47). This document teaches that the markings are applied to textiles by heating (reference is made, for example, to col. 11, lines 19 to 40). This document mentions only ammonium and amine salts of the aforementioned curing agents and does not mention or suggest the presence of glass or carbon fibers in the compositions.

The need was thus felt to provide further heat-thermal stabilizers and polyamide compositions that are stable to heat-ageing.

### Summary of invention

The Applicant has now found out that polyamides (herein after PA) compositions can be effectively stabilised to agents like light, UV rays, adverse weather conditions and high temperatures, by means of salts of certain polycarboxylic acids. In particular, the PA compositions of the invention are affectively stabilised to high temperatures and show improved resistance to the so-called heat-ageing phenomenon.

According to the present invention, the salts are obtained by salifying at least one carboxylic acid group in a polycarboxylic acid [acid (A)] selected from:
- a polycarboxylic acid free from nitrogen atoms, said acid containing at least two carboxylic acid groups and at least one hydroxy group [acid (A-1)]; and
- a polycarboxylic acid free from nitrogen atoms, said acid containing at least three carboxylic acid groups and no hydroxy groups [acid (A-2)]. The present invention thus relates to PA compositions which contain salts of acids (A), to a method for stabilizing PA compositions to heat-ageing comprising the use of acids (A) in PA compositions and to formed articles obtained from the stabilized compositions. The compositions of the present invention further contain a reinforcing filler [filler (F)], as defined herein below. Thus, for the sake of clarity, the method for stabilizing PA compositions to heat-ageing according to the present invention comprises adding salts of acids (A) to a PA composition comprising a PA and a reinforcing filler (F) as defined herein below.

In greater detail, the PA compositions according to the present invention [compositions (C)] comprise:
(a) a polyamide [polyamide (PA)] in a weight amount of at least 40%;
(b) a reinforcing filler [filler (F)]; and
(c) a salt [salts (S)] of a polycarboxylic acid [acid (A)] independently selected from:
   - a salt [salt (S-1)] of a polycarboxylic acid [acid (A-1)] free from nitrogen atoms, said acid containing at least two carboxylic acid groups and at least one hydroxy group; and
      atoms, said acid containing at least three carboxylic acid groups and no hydroxy groups.

Accordingly, the invention relates to a method for stabilizing PA compositions to heat-ageing, said method comprising adding a salt [salt (S)] of a polycarboxylic acid [(A)] as defined above to a PA composition comprising:
- a polyamide [polyamide (PA)] in a weight amount of at least 40%;
- a reinforcing filler [filler (F)].

Throughout the following description:
- the expression "salt of a polycarboxylic acid" (or "polycarboxylic acid salt") is intended to mean a polycarboxylic acid wherein at least one carboxylic acid group is under a salt form;
- the term "salt" is intended to include mono- and polyhydrates;
- the indeterminative article "a" means that one or more of each of the above components can be contained in compositions (C); with particular regard to salts (S), the compositions may contain salts of either one or more acids (A-1), salts of one or more acids (A-2) or combinations thereof as defined in claim 6.

Weight percentages of the ingredients in PA compositions are referred to the overall weight of the composition.

Polyamides (PA) suitable for use in the compositions of the present invention are defined by claim 2 and include:
- PA obtained by polycondensation of at least an aliphatic dicarboxylic acid with an aliphatic, cycloaliphatic or arylaliphatic diamine, such as PA 5.6, PA 6.6, PA 5.10, PA 5.12, PA 6.10, PA 6.12, PA 10.10, PA 10.6, PA 10.12, PA 12.12, PA 4.6, PA MXD6, PA 92, PA 102;
- PA obtained by polycondensation of an aromatic dicarboxylic acid and an aliphatic or aromatic amine, such as polyterephthalamides of the type PA 4T, PA 9T, PA 10T, PA 10T/11, PA 10T/10I, PA 10T/6T, PA 10T/106, PA 11T, PA 12T, PA 13T or 6T/MT, PA 6T/6I, PA 66/6T, PA 66/6T/6I copolymers in various molar compositions in dicarboxylic acids, polyisophthalamides of the type PA 61, PA 6I/6T, polynaphthalamides of the type PA 10N, PA 11 N, PA 12N, polyarylamides like Kevlar®, as well as mixtures and (co)polyamides thereof;
- PA obtained by polycondensation of at least one aminoacid or lactam, the aminoacid being possibly obtained by hydrolysis of a lactam, such as PA 6, PA 7, PA 11, PA 12, PA 13, as well as mixtures and (co)polyamides thereof. Polyamide 6/66, polyamide 6/11, polyamide 6/12 and polyamide 11/12 can be mentioned as examples of (co)polyamides. Diamines and diacids can also include heteroatoms; 5-hydroxyisophthalic acid, 5-sulfoisophthalic acid and their salts, such as lithium, sodium, or zinc salts can be mentioned.

Aliphatic or semi-aromatic semi-crystalline polyamides are preferred.

Polyamides of the type 6, 6/66, 610, 66, 66/6T, 6T/66, 6T/6I, 6T/66/6I, MXD6, 106, 10T, 10/101, 10T/106, 9T are also preferred.

Generally, the polyamide is a semi-crystalline polyamide having an apparent melt viscosity between 0.5 and 1200 Pa.s, measured according to standard ISO 1443 at a shear rate of 1000 s⁻¹ at a temperature 20°C higher than the melting temperature of the polyamide, preferably between 0.5 and 500 Pa/s.

In particular, use can be made of polyamides having different molecular weights by adding before or during the polymerization of the polyamide monomers, or even during melt-extrusion, chain-length modifying monomers, such as in particular difunctional and / or monofunctional compounds having amino or carboxylic acid functions capable of reacting with the polyamide monomers or with the polyamide. The polyamides can also have a different molar content in amino and carboxylic acid end groups; typically, according to the present invention, the overall content of amino end groups and carboxylic end groups is higher than 1 meq/kg, preferably higher than 10 meq/kg, more preferably higher than 20 meq kg. Among the polyamides having a different content in amino and carboxylic acid end groups, those having a content of amino groups higher than that of carboxylic acid end groups (also referred to as "amine-rich polyamides") are preferred. In particular, for the purposes of the present invention, an amine-rich polyamide is a polyamide having a content of amino end groups equal to or higher than 60 meq/kg. In a preferred embodiment, an amine-rich polyamide (PA) is an aliphatic PA obtained by polycondensation of at least an aliphatic dicarboxylic acid with an aliphatic diamine (herein after "aliphatic amine-rich PA"). The polyamide has a content of amino end groups hgher than the content of carboxylic acid end groups as defined in claim 3.

Compounds having "carboxylic acid" functions comprise carboxylic acids and derivatives thereof, such as acid anhydrides, acid chlorides and esters. Compounds having "amine" functions refer to amines and derivatives thereof capable of forming an amide bond.

All the aforementioned acids and amines can be used at the beginning, during or at the end of polymerization.

Mention can be made in particular of polyamides obtained from adipic acid and hexamethylenediamine or salts thereof, such as hexamethylenediamine adipate, which may optionally comprise various proportions of other polyamide-forming monomers. In this regard, mention can be made of polyamides 66/6T, containing different molar amounts of terephthalic acid monomer.

The polyamide can also be a copolyamide derived from the above-mentioned polyamides, or mixtures or (co)polyamides thereof.

Use can also be made of high fluidity or high-visclosity polyamides obtained by mixing, in the course of the polymerization, the polyamide monomers with at least one multifunctional compound comprising at least three reactive functional groups independently selected from amino and carboxy groups. These polyamides can be referred to as:
- "star-like" polyamides, when an aminoacid or a lactam is polymerized in presence of a multifunctional molecule having only one type of reactive functional group; and
- "branched" polyamides when an aminoacid lactam is polymerized in the presence of a multifunctional molecule having at least two different reactive functional group or when a salt of a diamine and a salt of a dicarboxylic acid are polymerized in presence of a multifunctional molecule.

As a high fluidity polyamides, use can also be made of star polyamides comprising star macromolecular chains and, if appropriate, linear macromolecular chains. Polyamides comprising such star macromolecular chains are described for example in WO 97/24388 and WO 99/64496 **.** These polyamides can be obtained by mixing in the course of the polymerization, in the presence of the polyamide monomers, an amino acid or a lactam, such as caprolactam and at least one multifunctional compound comprising at least three reactive functional groups independently selected from amino and carboxy groups.

In the present description, a reactive amino groups include amines and their derivatives capable of forming an amide bond, while a reactive carboxy functional group include acids and derivatives thereof, such as acid anhydrides, acid chlorides and esters.

The amount of filler (F) in PA compositions (C) is preferably higher than 10%wt, more preferably than 30% wt, with respect to the overall weight of the composition. Filler (F) is selected from glass fibres or carbon fibres.

Particularly preferred is the use of glass fibers. More preferably, the fiber is the most widely used glass fibers of cut-type (chopped), having a diameter of between 7 and 14 µm (microns) and a length less than 5 mm. Fillers (F) can be treated on their surface in such a way as to improve their adhesion with the polyamide matrix.

Polycarboxylic acids (A-1) and (A-2) can be aliphatic, cycloaliphatic or aromatic and have a molecular weight typically lower than 1,000; acids (A-1) and (A-2) may optionally contain one or more heteroatoms other than nitrogen.

Aliphatic polycarboxylic acids (A-1) typically comprise from 3 from 20 carbon atoms, while aliphatic polycarboxylic acids (A-2) usually comprise from 4 to 20 carbon atoms, the number of carbon atoms including also the carbon atom of the carboxy functions.

Cycloaliphatic polycarboxylic acids (A-1) and (A-2) typically comprise a cycloaliphatic ring containing from 4 to 20 carbon atoms, said ring being saturated or partially unsaturated and optionally containing one of more heteroatoms like O and S and optionally containing and/or being substituted with functional groups like carbonyl, sulfonyl, with the proviso that the functional group is not an amino group.

Aromatic polycarboxylic acids (A-1) and (A-2) typically comprise one or more aromatic and/or heteroatomatic rings having from 5 to 18 members, preferably 6 to 12 members; if the acids contain more (hetero)aromatic ring, the rings can be equal to or different from one another; if the acids contain more aromatic rings, the rings can also be condensed or can be joined together through an alkylene chain optionally interrupted by heteroatoms like O and S, or by functional groups like carbonyl, sulfonyl, groups, with the proviso that the functional group is not an amino group. The alkylene chain joining aromatic or heteroaromatic rings together can also be a (per)haloalkylene chain. Aromatic polycarboxylic acids (A-1) and (A-2) can also bear alkyl or (per)haloalkyl substituents which can form with the aromatic or heteroaromatic ring a polycondensed structure containing aromatic and non-aromatic rings.

Examples of polycarboxylic aliphatic acids (A-1) optionally containing one or more heteroatoms other than nitrogen are:
- citric acid (2-hydroxypropane-1,2,3-tricarboxylic acid);
- tartaric acid (2,3-dihydroxybutanedioic acid);
- malic acid (hydroxybutanedioic acid)
- oxomalic acid [2-hydroxy-3-(2-hydroxy-1,2-dioxoethyl)butanedioic acid].
Among them, citric acid is preferred.

Examples of polycarboxylic aliphatic acids (A-2), optionally containing one more heteroatoms other than nitrogen are:
- ethane-1,1,2,2 tetracarboxylic acid;
- butane-1,2,3,4 tetracarboxylic acid;
- pentane-1,2,4,5-tetracarboxylic acid.
Among them, butane-1,2,3,4 tetracarboxylic acid is preferred.

Examples of polycarboxylic cycloaliphatic acids (A-2) optionally containing one or more heteroatoms other than nitrogen, are:
- 1,2,3,4-cyclobutane tetracarboxylic acid;
- 2,2,6,6-tetra-(carboxyethyl)cyclohexanone;
- (+)-(18-crown-6)-2,3,11,12-tetracarboxylic acid;
- cyclopentane-1,2,3,4 tetracarboxylic acid;
- cyclohexane-1,2,4,5 tetracarboxylic acid;
- cyclohexane -2,3,5,6 tetracarboxylic acid;
- 3-ethylcyclohexane-1,2,4,5 tetracarboxylic acid;
- 1-methyl-3-ethyl cyclohexane-3-(1,2)5,6 tetracarboxylic acid;
- 1-ethyl cyclohexane-1-(1,2),3,4 tetracarboxylic acid;
- 1-propylcyclohexane-1-(2,3),3,4 tetracarboxylic acid;
- 1,3-dipropylcyclohexane-1-(2,3),3-(2,3) tetracarboxylic acid;
- dicyclohexyl-3,4,3',4' tetracarboxylic acid.

Examples of polycarboxylic aromatic acids (A-2), optionally containing one or more heteroatoms other than nitrogen are:
- pyromellitic acid (1,2,4,5- benzene tetracarboxylic acid);
- trimesic acid (1,3,5-benzene tricarboxylic acid);
- trimellitic acid (1,3,4-benzene tricarboxylic acid);
- benzophenone-3,3',4,4'-tetracarboxylic acid;
- tetrahydrofuran-2,3,4,5-tetracarboxylic acid;
- 4,4'-(hexafluoroisopropylidene)diphthalic acid;
- 4,4'-oxydiphthalic acid anhydride;
- 4,4'-(4,4'-isopropylidenediphenoxy)bis(phthalic acid);
- 3,3',4,4'-biphenyl tetracarboxylic acid;
- 2,3,3',4'-biphenyl tetracarboxylic acid;
- 2,2',3,3'-biphenyl tetracarboxylic acid;
- 1,2,5,6-naphthalene tetracarboxylic acid;
- 2,3,6,7-naphthalene tetracarboxylic acid;
- perylene-3,4,9,10 tetracarboxylic acid;
- propane 2,2-bis(3,4-dicarboxyphenyl) acid;
- ethane 1,1-bis(2,3-dicarboxyphenyl) acid;
- ethane 1,1-bis(3,4-dicarboxyphenyl) acid;
- phenanthrene-1,8,9,10-tetracarboxylic acid;
- tetrahydrofuran-2,3,4,5-tetracarboxylic acid;
- 3,3',4,4'-benzophenone tetracarboxylique acid;
- 2,2',3,3'-benzophenone tetracarboxylic acid;
- 2,3,5,6-pyridine tetracarboxylic acid;
- 3,3',4,4'-tetraphenylsilane tetracarboxylic acid;
- 2,2'-bis-(3,4-bicarboxyphenyl) hexafluoropropane tetracarboxylic acid;
- 2,2-bis(3,4-dicarboxyphenyl) sulfonic acid;
- 4,4'-(hexafluoroisopropylidene) diphthalic acid;
- 3,3',4,4'-diphenylsulfone tetracarboxylic acid;
- ethyleneglycol bistrimellitic acid;
- hydroquinone diphthalique acid;
- pyrazine-2,3,5,6-tetracarboxylic acid;
- thiophene-2,3,4,5-tetracarboxylic acid.
Among them, pyromellitic acid, trimesic acid and trimellitic acid are preferred.

In compositions (C) according to the invention, at least one carboxylic acid group in the above polycarboxylic acids (A-1) and (A-2) is salified.

Although there is no limitation to the nature of salts (A-1) and (A-2) to be used in the compositions of the invention, the salts are typically those with monovalent, divalent, trivalent or tetravalent ions or mixtures thereof. Examples of monovalent ions are lithium, sodium, potassium, copper(I), silver, ammonium and phosphonium ions; examples of divalent ions are magnesium, calcium, copper(II), manganese and iron(II) ions; example of trivalent ions are the iron(III) and aluminium ions, while examples of tetravalent ions are titanium (IV) and zirconium(IV) ions. Preferred counter ions are sodium and iron(III) ions.

According to a most preferred embodiment, the PA composition (C) contain a salt of citric acid, more preferably a citric acid sodium salt or a citric acid iron (III) salt. Even more preferably, composition (C) contains citric acid monosodium salt. Compositions (C) comprising citric acid monosodium salt preferably comprise an aliphatic amine-rich PA as defined above.

In compositions (C), the amount of salts of acid (A-1) and/or (A-2) typically ranges from 0.05 to 20% wt with respect to the overall weight of the composition, preferably from 0.5 to 10%wt, more preferably from 1 to 5% wt, even more preferably from 1.2 to 3% wt.

PA compositions (C) according to the invention may further comprise additives commonly used in the manufacture of polyamide compositions. Such additives include lubricants, flame retardants, plasticizers, nucleating agents, UV and light stabilizers, other thermal stabilizers such as CuI/KI, polyhydric alcohols, elementary iron, zinc oxide and mixtures thereof, catalysts, antioxidants, antistatic agents, dyers, matifying agents, molding aids or other conventional additives. In one embodiment, the compositions do not contain flame retardants, especially triazine flame retardants like those disclosed in US 2008146704.

The compositions of the invention may also contain one or more impact modifier, i.e a compound able to increase durability. Suitable impact modifiers are elastomers like those reported, for example in WO 2012/140099 A1.

Although compositions (C) according to the invention may contain, in addition to a polyamide (PA), further thermoplastic polymers, the composition preferably contain only one or more polyamides (PA) as thermoplastic polymer(s). A preferred mixture of polyamides (PA) is a mixture of PA 66 or of a polyphthalamide with a caprolactam-based polyamide, the latter being in an amount ranging from 3 to 40% wt of the PA mixture. In a preferred embodiment, compositions (C) do not contain polyphenylene ethers (PPEs) and/or (poly)phenylene sulfides (PPSs).

The above additives and any further ingredients can be added to compositions (C) according to conventional methods; for example, they can be added during the polymerization process for the manufacture of the polyamide or by melt-blending.

Although the compositions (C) may contain further heat-stabilizers besides salts of acids (A), in a preferred embodiment compositions (C) do not contain a CuI/KI stabilizer; indeed, it has been observed that compositions containing a salt of an acid (A) instead of CuI/KI retain tensile strength after prolonged heating. In a most preferred embodiment, compositions (C) do not contain any other heat-stabilizer than an acid (A).

According to a preferred embodiment, compositions (C) of the present invention as defined by claim 10 contain:
(a) a polyamide [polyamide (PA)] in a weight amount of at least 40% wt;
(b) a reinforcing filler [filler (F)], preferably a glass fiber, in a weight amount of at least 30% wt; and
(c) a citric acid salt, preferably a sodium or an iron(III) citric acid salt in an amount ranging between 1.2 to 3% wt.

According to a most preferred embodiment, compositions (C) according to the present invention comprise:
(a) an aliphatic polyamide (PA) having a content of amino end groups higher than the content of carboxylic acid end groups, said PA being in a weight amount of at least 40%wt;
(b) a glass fiber in a weight amount of at least 30% wt; and
(c) citric acid monosodium salt in an amount ranging between 1.2 to 3% wt.

Indeed, the Applicant observed that, after 500 hrs ageing at 210°C, compositions (C) comprising an aliphatic amine-rich polyamide (PA), glass fibers and citric acid monosodium salt in the aforementioned amounts retain their initial mechanical properties.

The polyamide compositions of the invention are generally obtained by cold- or melt-mixing in a suitable container or vessel a polyamide (PA), a filler (F), a salt of acid (A) and, optionally, any other additives. Temperature and shear will be adjusted by a person skilled in the art according to the nature of the selected ingredients. The ingredients can be mixed simultaneously or successively. Typically, the container is an extruder in which the ingredients are heated, melted, subjected to shear forces, and extruded.

All ingredients can be melt-mixed in a single step, for example during an extrusion process. For example, a mixture of granules of polymeric materials can be prepared, then the mixture can be placed in an extruder, so that it can be melted and submitted to shear forces. According to a particular embodiment of the invention, molten or non-molten pre-mixtures of some of the ingredients of the composition can be prepared. When prepared using an extrusion device, PA compositions (C) according to the invention are preferably obtained in the form of granules. The granules can be then melt-processed to provide formed articles. According to a typical embodiment of the invention, PA compositions (C) are extruded in the form of rods, for example in a twin-screw extruder, and the rods are then cut into pellets. Thereafter, formed articles can be manufactured by melting the pellets and feeding the molten pellets into shaping devices, including injection molding devices.

PA compositions (C) according to the present invention can be used in any method for the shaping of plastics, such as for example molding methods, including injection molding, extrusion, blow molding and rotational molding. An extrusion process can be in particular a spinning process or a film manufacturing process.

The present invention also relates to the manufacture of impregnated-type fibre or continuous-fiber composite articles. These articles can be made in particular by contacting a fabric and PA composition (C) according to the invention in the solid or molten state. The fabrics are textile surfaces obtained by assembling yarns or fibers held together by means of any suitable method, like bonding, felting, weaving, braiding or knitting. These fabrics can also be fibrous or filamentary networks, which are based for example on glass fibers, carbon fibers or other fibers. Their structure can be random, unidirectional (1D), or multidirectional (2D, 2.5D, 3D or otherwise).

The present invention also relates to formed articles obtainable by shaping PA compositions (C) according to the invention, the shaping can be for example carried out by extrusion, extrusion blow-molding, or injection molding. The articles can be used, for example, in automotive, electronic and electric applications.

In particular, the present invention relates to formed articles for use in applications wherein high temperatures are reached, in particular temperatures above or equal to 80°C, in particular temperatures above or equal to 110°C, more specifically temperatures higher or equal to 180°C.

Generally, such articles are those suitable for containing or conveying fluids, i.e. liquids or gases, heated to high temperatures, for examples articles of car cooling circuits that are designed to keep the engine at an optimal and almost constant temperature of about 100 °C. The formed articles according to the invention will be designed and manufactured according to the specific intended use.

The formed articles obtainable by shaping compositions (C) according to the present invention can be used under prolonged heating, in particular under prolonged contact with a hot liquid or fluid. Typically, the contact is of the order of more than 500 hours, preferably of more than 1000 hours. Such formed articles comprise, for example, articles for water / glycol cooling circuits, for example water tanks, transfer hoses, thermostat housings, housing vents, radiators, air circuit sections, such as turbo nozzles, air / air exchangers (intercoolers), air inlet or outlet housings of turbo chillers, exhaust gas recycling, air intake manifolds and associated pipings, catalytic converter housings, parts of fan motor assemblies, intercoolers, and articles for oil circuits like cylinder heads, oil pans, modules for oil filtering, gear assemblies and oil-carrying pipes. These articles are well known in the field of engine-powered vehicles like cars.

Should the disclosure of any patents, patent applications, and publications which are incorporated herein by reference conflict with the description of the present application to the extent that it may render a term unclear, the present description shall take precedence.

The invention will be herein after illustrated in greater detail by means of non-limiting examples in the following experimental section.

### EXPERIMENTAL SECTION

### Preparation of the compositions

Before compounding, pellets of polyamides were dried to decrease the water content below 1500 ppm. The compositions were obtained by melt blending of the selected ingredients in a WERNER&PLEIFEDER® ZSK 40 twin-screw extruder using the following parameters: 35kg/hour, 280 rounds per minute, 8 heating zone 250, 255, 260, 260, 265, 270, 275, 280 °C. All ingredients were fed at the beginning of the extruder. The extruded strand was cooled in a water bath, then pelletized and the obtained pellets were stored into sealed aluminium line bags to prevent moisture adsorption.

The following ingredients were used:
- Polyamide 66 Stabamid® 26AE2 supplied by Solvay®. VI=134 mL/g (VI=Viscosity Index of polyamide measured in a formic acid solution according to ISO 307); this polyamide has more carboxylic acids than amino end groups;
- Polyamide 66 Stabamid® 27FE1 supplied by Solvay®. VI=136,5 mL/g; this polyamide has 85 meq/kg of amino end groups, which is higher than the concentration of carboxylic acids end groups;
- lubricant;
- Cul et KI from AJAY® Europe;
- Iron(III) citrate technical grade from SIGMA-ALDRICH®;
- sodium citrate monobasic >99% from SIGMA-ALDRICH®;
- sodium citrate tribasic dihydrate >99% from SIGMA-ALDRICH®;
- citric acid 99% from SIGMA-ALDRICH®;
- ethylenediaminetetraacetic acid (EDTA) from SIGMA-ALDRICH®
- 2,2,6,6-tetra-(β-carboxyethyl)cyclohexanone (CAS number: 5107-67-5) prepared according to the process described in "The Chemistry of Acrylonitrile II - Reactions with ketones" JACS, 64, 2850 (1942), by Herman Alexander Buison and Thomas W. Riener. This compound is herein after referred to as T4;
- glass fibers OCV 983 from Owens Corning®.

### Evaluation of stability to air oven ageing

The compositions were then injection-molded using a DEMAG® 50T injection molding machine at 290°C with a mold temperature of 85°C to prepare 4 mm thick ISO527 samples. Before ageing, initial mechanical properties (E-modulus, tensile strength (TS) at break and strain at break) were characterized by tensile measurements according to ISO 527/1A at 23°C. The average values were obtained from 5 samples.

The samples were heat aged in a re-circulating air oven (Toyoseiki 30SS) set at 210°C. At various heat ageing times, the samples were removed from the oven, allowed to cool to room temperature and placed into sealed aluminium lined bags until ready for testing. Mechanical properties were measured according to the same procedure as before ageing.

The retention of a mechanical property (tensile strength at break, E-modulus, strain at break) is expressed as the percentage of the ratio of the value of the mechanical property after a certain heat ageing time and the value of the mechanical property before ageing. For example, for a heat ageing time of 500h, retention (TS) is expressed as percentage of TS(500h)/TS(initial).

The ingredients and their reciprocal amounts in the compositions and the mechanical properties of the samples before and after air oven ageing are reported in Tables 1 - 3 below. Compositions 1 and 2 are compositions according to the present invention, while compositions C1-C4 are reported for the purpose of comparison.

**Table 1 - Ingredients and reciprocal amounts in the compositions**

| | C1 | C2 | C3 | C4 | 1 | 2 |
|---|---|---|---|---|---|---|
| PA 66 26AE2 (wt.-%) | 64.45 | 62.7 | 62.7 | 62.7 | 62.7 | 62.7 |
| Glass fibers (wt.-%) | 35 | 35 | 35 | 35 | 35 | 35 |
| Lubricant (wt.-%) | 0.3 | 0.3 | 0.3 | 0.3 | 0.3 | 0.3 |
| Iron III citrate (wt.-%) | | | | | 2 | |
| Na monobasic citrate (wt.-%) | | | | | | 2 |
| T4 (wt.-%) | | 2 | | | | |
| EDTA (wt.-%) | | | 2 | | | |
| Citric acid (wt.-%) | | | | 2 | | |
| Cul / KI (wt.-%) | 0.04/0.21 | | | | | |

**Table 2 - Properties of the samples before ageing**

| | C1 | C2 | C3 | C4 | 1 | 2 |
|---|---|---|---|---|---|---|
| Tensile strength at break (MPa) | 206 | 179 | 186 | 201 | 204 | 215 |
| Elastic modulus (MPa) | 11,144 | 11,202 | 11,426 | 11,236 | 11,294 | 11,343 |
| Strain at break (%) | 3.6 | 2.1 | 2.1 | 3.2 | 3.7 | 3.5 |

It stems from table 2 above by comparing C1 with C2 - C4, that the replacement of CuI / KI with a polycarboxylic acid (either EDTA or citric acid or T4) to compositions C1 decreases the mechanical properties before ageing. It further stems from the comparison of compositions 1 and 2 with C4 that the replacement of CuI / KI with a citrate salt retains or increases the mechanical properties before ageing.

**Table 3 - Properties of the samples after ageing (500 h at 210°C)**

| | C1 | C2 | C3 | C4 | 1 | 2 |
|---|---|---|---|---|---|---|
| Tensile strength at break (MPa) | 146 | 49 | 86 | 73 | 153 | 147 |
| Retention in tensile strength | 71% | 27% | 46% | 36% | 75% | 68% |
| Elastic modulus (MPa) | 11,640 | 9,487 | 10,662 | 10,411 | 11,076 | 11,525 |
| Strain at break (%) | 1.5 | 0.6 | 0.9 | 0.8 | 1.9 | 1.6 |

It stems from the results reported in table 3 that the replacement of CuI / KI with a citric acid salt allows to retain tensile strength after 500 h ageing at 210°C, while the replacement of Cu/KI with polycarboxylic acid T4 or with EDTA leads to a dramatic decrease of tensile strength.

Table 4 below discloses glass filled compositions (Examples 3, 5 and 6) of a PA 66 having more amino end groups than carboxylic acids end groups with different types and contents of salts of polycarboxylic acid. The composition of Example 4 disclosed in the same table is meant to compare the effect of the concentration of the stabilizer with respect to Example 1.

**Table 4 - Ingredients and reciprocal amounts in the compositions**

| | 3 | 4 | 5 | 6 |
|---|---|---|---|---|
| PA 66 26AE2 (wt.-%) | | 61.7 | | |
| PA 66 27AE1 (wt.-%) | 63.7 | | 61.7 | 61.7 |
| Glass fibers (wt.-%) | 35 | 35 | 35 | 35 |
| Lubricant (wt.-%) | 0.3 | 0.3 | 0.3 | 0.3 |
| Iron III citrate (wt.-%) | 1 | 3 | | |
| Na monobasic citrate (wt.-%) | | | | 3 |
| Na tribasic citrate (wt.-%) | | | 3 | |

The mechanical properties of Compositions 3 - 4 before ageing are reported in table 5 below.

**Table 5 - Properties of the compositions before ageing**

| | 3 | 4 | 5 | 6 |
|---|---|---|---|---|
| Tensile strength at break (MPa) | 192 | 189 | 192 | 188 |
| Elastic modulus (MPa) | 10,973 | 11,176 | 11,129 | 11,579 |
| Strain at break (%) | 3.4 | 3.7 | 3.5 | 2.3 |

Air oven ageing was been evaluated at 210°C for 500h (results reported in Table 6) and 1000h (results reported in Table 7).

**Table 6 - Properties of the compositions after ageing (500 h at 210°C)**

| | 3 | 4 | 5 | 6 |
|---|---|---|---|---|
| Tensile strength at break (MPa) | 171 | 171 | 165 | 189 |
| Retention in tensile strength | 89% | 91% | 86% | 101% |
| Elastic modulus (MPa) | 11,044 | 11,122 | 11,919 | 12,011 |
| Strain at break (%) | 2.2 | 2.2 | 1.9 | 2.3 |

**Table 7 - Properties of the compositions after ageing (1000 h at 210°C)**

| | 3 | 4 | 5 | 6 |
|---|---|---|---|---|
| Tensile strength at break (MPa) | 100 | 90 | 117 | 152 |
| Retention in tensile strength | 52% | 48% | 61% | 81% |
| Elastic modulus (MPa) | 9,324 | 9,348 | 10,948 | 11,310 |
| Strain at break (%) | 1.5 | 1.2 | 1.5 | 1.7 |

It stems from the obtained results that:
- the use of a higher concentration of iron III citrate improves the retention in mechanical properties after exposure at high temperature (comparison Example 1 and Example 4);
- the use of a PA 66 having a higher concentration of amino end groups than carboxylic end groups brings a better thermal resistance: even if the composition of Example 3 contains less iron III citrate than that of Example 1, the mechanical properties are better;
- the composition of Example 6, comprising a PA having a concentration of an amino end groups higher than that of carboxylic acid end group and containing citric acid monosodium salt, retains 100% of the initial mechanical properties after 500h exposure at 210°C.

## Claims

1. A polyamide composition [composition (C)] comprising:
(a) a polyamide [polyamide (PA)] in a weight amount of at least 40%;
(b) a reinforcing filler [filler (F)] selected from a glass fiber and a carbon fiber; and
(c) a salt [salt (S)] of a polycarboxylic acid [acid (A)] independently selected from:
- a salt [salt (S1)] of a polycarboxylic acid free from nitrogen atoms, said acid containing at least two carboxylic acid groups and at least one hydroxy group [acid (A-1)]; and
- a salt [salt (S2] of a polycarboxylic acid free from nitrogen atoms, said acid containing at least three carboxylic acid groups and no hydroxy groups [acid (A-2)].

2. The polyamide composition of claim 1 wherein the polyamide is selected from:
- a polyamide (PA) obtained by polycondensation of an aliphatic dicarboxylic acid with an aliphatic, cycloaliphatic or arylaliphatic diamine;
- a polyamide (PA) obtained by polycondensation of an aromatic dicarboxylic acid with an aliphatic or aromatic diamine;
- a polyamide (PA) obtained by polycondensation of at least one aminoacid or lactam,
said polyamides optionally being obtained by mixing, in the course of the polymerization, chain-length modifying monomers and/or at least one multifunctional compound comprising at least three reactive functional groups, independently selected from reactive amino and carboxy groups.

3. The polyamide composition of claim 2 wherein the polyamide has a content of amino end groups higher than the content of carboxylic acid end groups and is obtained by polycondensation of an aliphatic dicarboxylic acid with an aliphatic diamine.

4. The polyamide composition of any one of claims 1 to 3 wherein the amount of reinforcing filler (F) in compositions (C) is higher than 10% wt with respect to the overall weight of the composition.

5. The polyamide composition of any one of claims 1 to 4 wherein filler (F) is a glass fiber.

6. The polyamide composition of any one of claims 1 to 5 wherein salt (S) is a salt (S1) or (S2) of an aliphatic, cycloaliphatic or aromatic polycarboxylic acid (A-1) or (A-2) having a molecular weight lower than 1,000 g/mol or a combination thereof.

7. The polyamide composition of claim 6 wherein salt (S) is selected from a salt of citric acid, butane 1,2,3,4 tetracarboxylic acid, pyromellitic acid, trimesic acid and trimellitic acid.

8. The polyamide composition of claim 7 wherein salt (S) is a citric acid monosodium salt or a citric acid iron (III) salt.

9. A polyamide composition according to any one of claims 1 - 8 wherein the amount of salt (S) ranges from 0.05 to 20% wt with respect to the overall weight of the composition.

10. A polyamide composition according to any one of claims 3 - 7, said composition comprising:
(a) an aliphatic polyamide (PA) having a content of amino end groups higher than the content of carboxylic acid end groups, said PA being in a weight amount of at least 40%wt;
(b) a glass fiber in a weight amount of at least 30% wt; and
(c) citric acid monosodium salt in an amount ranging between 1.2 to 3% wt.

11. A formed article obtained by shaping the polyamide compositions of any one of claims 1 - 10.

12. An impregnated-fiber or a continuous-fiber composite article comprising a fabric and polyamide composition (C) as defined in any one of claims 1 to 10.

13. A method for the shaping of plastics which comprises using a polyamide composition (C) of any one of claim 1 to 10.

14. A method for the manufacture of an impregnated-fiber or a continuous-fiber composite article comprising contacting a fabric and a composition (C) of any one of claims 1 to 10 in the solid or molten state.

15. A method for stabilizing PA compositions to heat-ageing, said method comprising adding a salt [salt (S)] of a polycarboxylic acid [acid (A)] as defined in any one of claims 1, 6, 7 and 8 to a PA composition comprising:
- a polyamide [polyamide (PA)] in a weight amount of at least 40%;
- a reinforcing filler [filler (F)] selected from a glass fiber and a carbon fiber.

## Patentansprüche

1. Polyamidzusammensetzung [Zusammensetzung (C)] umfassend:
(a) ein Polyamid [Polyamid (PA)] in einer Gewichtsmenge von wenigstens 40 %;
(b) einen Verstärkungsfüllstoff [Füllstoff (F)] ausgewählt aus einer Glasfaser und einer Kohlenstofffaser; und
(c) ein Salz [Salz (S)] einer Polycarbonsäure [Säure (A)] unabhängig ausgewählt aus:
- einem Salz [Salz (S1)] einer von Stickstoffatomen freien Polycarbonsäure, wobei die Säure wenigstens zwei Carbonsäuregruppen und wenigstens eine Hydroxygruppe enthält [Säure (A-1)]; und
- einem Salz [Salz (S2)] einer von Stickstoffatomen freien Polycarbonsäure, wobei die Säure wenigstens drei Carbonsäuregruppen und keine Hydroxygruppen enthält [Säure (A-2)].

2. Polyamidzusammensetzung gemäß Anspruch 1, wobei das Polyamid ausgewählt ist aus:
- einem Polyamid (PA), erhalten durch Polykondensation einer aliphatischen Dicarbonsäure mit einem aliphatischen, cycloaliphatischen oder arylaliphatischen Diamin;
- einem Polyamid (PA), erhalten durch Polykondensation einer aromatischen Dicarbonsäure mit einem aliphatischen oder aromatischen Diamin;
- einem Polyamid (PA), erhalten durch Polykondensation wenigstens einer Aminosäure oder eines Lactams,
wobei die Polyamide gegebenenfalls durch Mischen im Verlauf der Polymerisation von Kettenlängen-modifizierenden Monomeren und/oder wenigstens einer mehrfunktionellen Verbindung, die wenigstens drei reaktionsfähige funktionelle Gruppen umfasst, unabhängig ausgewählt aus reaktionsfähigen Amino- und Carboxygruppen, erhalten sind.

3. Polyamidzusammensetzung gemäß Anspruch 2, wobei das Polyamid einen Gehalt von Amino-Endgruppen aufweist, der höher als der Gehalt an Carbonsäure-Endgruppen ist, und durch Polykondensation einer aliphatischen Dicarbonsäure mit einem aliphatischen Diamin erhalten ist.

4. Polyamidzusammensetzung gemäß einem der Ansprüche 1 bis 3, wobei die Menge an Verstärkungsfüllstoff (F) in Zusammensetzungen (C) höher als 10 Gew.-% bezogen auf das Gesamtgewicht der Zusammensetzung ist.

5. Polyamidzusammensetzung gemäß einem der Ansprüche 1 bis 4, wobei der Füllstoff (F) eine Glasfaser ist.

6. Polyamidzusammensetzung gemäß einem der Ansprüche 1 bis 5, wobei das Salz (S) ein Salz (S1) oder (S2) einer aliphatischen, cycloaliphatischen oder aromatischen Polycarbonsäure (A-1) oder (A-2) mit einem Molekulargewicht von unter 1.000 g/mol oder eine Kombination davon ist.

7. Polyamidzusammensetzung gemäß Anspruch 6, wobei das Salz (S) ausgewählt ist aus einem Salz von Citronensäure, Butan-1,2,3,4-tetracarbonsäure, Pyromellitsäure, Trimesinsäure und Trimellitsäure.

8. Polyamidzusammensetzung gemäß Anspruch 7, wobei das Salz (S) ein Citronensäure-Mononatriumsalz oder ein Citronensäure-Eisen(III)-Salz ist.

9. Polyamidzusammensetzung gemäß einem der Ansprüche 1-8, wobei die Menge an Salz (S) in dem Bereich von 0,05 bis 20 Gew.-% bezogen auf das Gesamtgewicht der Zusammensetzung liegt.

10. Polyamidzusammensetzung gemäß einem der Ansprüche 3-7, wobei die Zusammensetzung umfasst:
(a) ein aliphatisches Polyamid (PA) mit einem Gehalt von Amino-Endgruppen, der höher als der Gehalt an Carbonsäure-Endgruppen ist, wobei das PA in einer Gewichtsmenge von wenigstens 40 Gew.-% vorliegt;
(b) Glasfaser in einer Menge von wenigstens 30 Gew.-%; und
(c) Citronensäure-Mononatriumsalz in einer Menge in dem Bereich zwischen 1,2 und 3 Gew.-%.

11. Formkörper, erhalten durch Formgebung der Polyamidzusammensetzungen gemäß einem der Ansprüche 1-10.

12. Imprägnierte-Faser- oder kontinuierliche-Faser-Verbundstoffgegenstand, umfassend ein Gewebe und Polyamidzusammensetzung (C) gemäß einem der Ansprüche 1-10.

13. Verfahren zur Formgebung von Kunststoffen, umfassend Verwenden einer Polyamidzusammensetzung (C) gemäß einem der Ansprüche 1-10.

14. Verfahren zum Herstellen eines imprägnierte-Faser- oder eines kontinuierliche-Faser-Verbundstoffgegenstands, umfassend Inkontaktbringen eines Gewebes und einer Zusammensetzung (C) gemäß einem der Ansprüche 1-10 in dem festen oder geschmolzenen Zustand.

15. Verfahren zum Stabilisieren von PA-Zusammensetzungen gegen Wärmealterung, wobei das Verfahren Zugeben eines Salzes [Salz (S)] einer Polycarbonsäure [Säure (A)] gemäß einem der Ansprüche 1, 6, 7 und 8 zu einer PA-Zusammensetzung umfassend:
- ein Polyamid [Polyamid (PA)] in einer Gewichtsmenge von wenigstens 40 %;
- einen Verstärkungsfüllstoff [Füllstoff (F)] ausgewählt aus einer Glasfaser und einer Kohlenstofffaser
umfasst.

## Revendications

1. Composition de polyamide [composition (C)] comprenant :
(a) un polyamide [polyamide (PA)] selon une quantité pondérale d'au moins 40% ;
(b) une charge renforçante [charge (F)] choisie parmi une fibre de verre et une fibre de carbone ;
(c) un sel [sel (S)] d'un acide polycarboxylique [acide (A)] choisi indépendamment parmi :
- un sel [sel (S1)] d'un acide polycarboxylique dépourvu d'atomes d'azote, ledit acide contenant au moins deux groupements acide carboxylique et au moins un groupement hydroxy [acide (A-1)] ; et
- un sel [sel (S2)] d'un acide polycarboxylique dépourvu d'atomes d'azote, ledit acide contenant au moins trois groupements acide carboxylique et aucun groupement hydroxy [acide (A-2)].

2. Composition de polyamide selon la revendication 1, dans laquelle le polyamide est choisi parmi :
- un polyamide (PA) obtenu par polycondensation d'un acide dicarboxylique aliphatique avec une diamine aliphatique, cycloaliphatique ou arylaliphatique ;
- un polyamide (PA) obtenu par polycondensation d'un acide dicarboxylique aromatique avec une diamine aliphatique ou aromatique ;
- un polyamide (PA) obtenu par polycondensation d'au moins un acide aminé ou lactame ;
lesdits polyamides étant éventuellement obtenus par mélange, au cours de la polymérisation, de monomères de modification de longueur de chaîne et/ou d'au moins un composé multifonctionnel comprenant au moins trois groupements fonctionnels réactifs, choisis indépendamment parmi des groupements amino et carboxy réactifs.

3. Composition de polyamide selon la revendication 2, dans laquelle le polyamide possède une teneur en groupements amino terminaux supérieure à la teneur en groupements acide carboxylique terminaux et est obtenu par polycondensation d'un acide dicarboxylique aliphatique avec une diamine aliphatique.

4. Composition de polyamide selon l'une quelconque des revendications 1 à 3, dans laquelle la quantité de charge renforçante (F) dans les compositions (C) est supérieure à 10% en poids par rapport au poids global de la composition.

5. Composition de polyamide selon l'une quelconque des revendications 1 à 4, dans laquelle la charge (F) est une fibre de verre.

6. Composition de polyamide selon l'une quelconque des revendications 1 à 5, dans laquelle le sel (S) est un sel (S1) ou (S2) d'un acide polycarboxylique aliphatique, cycloaliphatique ou aromatique (A-1) ou (A-2) ayant un poids moléculaire inférieur à 1000 g/mol ou une combinaison de ceux-ci.

7. Composition de polyamide selon la revendication 6, dans laquelle le sel (S) est choisi parmi un sel d'acide citrique, d'acide butane-1,2,3,4-tétracarboxylique, d'acide pyromellitique, d'acide trimésique et d'acide trimellitique.

8. Composition de polyamide selon la revendication 7, dans laquelle le sel (S) est un sel monosodique de l'acide citrique ou un sel de fer (III) de l'acide citrique.

9. Composition de polyamide selon l'une quelconque des revendications 1-8, dans laquelle la quantité de sel (S) va de 0,05 à 20% en poids par rapport au poids global de la composition.

10. Composition de polyamide selon l'une quelconque des revendications 3-7, ladite composition comprenant
(a) un polyamide aliphatique (PA) ayant une teneur en groupements amino terminaux supérieure à la teneur en groupements acide carboxylique terminaux, ledit PA se trouvant selon une quantité pondérale d'au moins 40% en poids ;
(b) une fibre de verre selon une quantité pondérale d'au moins 30% en poids ; et
(c) un sel monosodique de l'acide citrique selon une quantité allant de 1,2 à 3% en poids.

11. Article formé obtenu par le façonnage des compositions de polyamide selon l'une quelconque des revendications 1-10.

12. Article composite en fibres continues ou en fibres imprégnées, comprenant un tissu et une composition de polyamide (C) telle que définie selon l'une quelconque des revendications 1 à 10.

13. Méthode de façonnage de matières plastiques, comprenant l'utilisation d'une composition de polyamide (C) selon l'une quelconque des revendications 1 à 10.

14. Méthode de fabrication d'un article composite en fibres continues ou en fibres imprégnées, comprenant la mise en contact d'un tissu et une composition (C) selon l'une quelconque des revendications 1 à 10 à l'état solide ou fondu.

15. Méthode de stabilisation de compositions de PA vis-à-vis d'un vieillissement par la chaleur, ladite méthode comprenant l'addition d'un sel [sel (S)] d'un acide polycarboxylique [acide (A)] tel que défini selon l'une quelconque des revendications 1, 6, 7 et 8 à une composition de PA, comprenant :
- un polyamide [polyamide (PA)] selon une quantité pondérale d'au moins 40% ;
- une charge renforçante [charge (F)] choisie parmi une fibre de verre et une fibre de carbone.
